# EUROPEAN PATENT SPECIFICATION

(11) **EP 2 574 004 B1**
(45) Date of publication and mention of the grant of the patent: **08.06.2016**
(21) Application number: 10851611.3
(22) Date of filing: 16.08.2010
(51) Int. Cl.: H04L 29/08

(54) **METHOD, APPARATUS AND SYSTEM FOR IMPROVING SYNCHRONIZATION EFFICIENCY OF REALLY SIMPLE SYNDICATION SERVICE**
VERFAHREN, VORRICHTUNG UND SYSTEM ZUR VERBESSERUNG DER SYNCHRONISATIONSWIRKSAMKEIT EINES WIRKLICH EINFACHEN SYNDIKATDIENSTES
PROCÉDÉ, APPAREIL ET SYSTÈME POUR AMÉLIORER L'EFFICACITÉ DE SYNCHRONISATION DE SERVICE DE SYNDICATION RÉELLEMENT SIMPLE

(30) Priority: 21.05.2010 CN 201010183864
(43) Date of publication of application: 27.03.2013
(73) Proprietor: ZTE Corporation, Shenzhen, Guangdong 518057 (CN)
(72) Inventor: LI, Jianmei, Guangdong 518057 (CN); SHEN, Jian, Guangdong 518057 (CN); YUAN, Lei, Guangdong 518057 (CN); ZHU, Feng, Guangdong 518057 (CN)
(74) Representative: V.O.
(86) International application number: PCT/CN2010/076010
(87) International publication number: WO 2011/143853

(56) References cited:
- CN-A- 101 288 048
- CN-A- 101 496 000
- CN-A- 101 626 339
- US-A1- 2003 101 235
- US-A1- 2008 155 112
- US-A1- 2008 267 221

## Description

### Field of the Invention

The present invention relates to the communication technology field, and in particular to a method, apparatus and system for improving the synchronization efficiency of Really Simple Syndication (RSS) service.

### Background of the Invention

RSS is a format standard of information source, and a simple method for one site to share contents with other sites, used to publish the websites that need regularly updating data, such as digest of Blog articles, news, audio messages or video messages, with the characteristics of diversification in sources, low cost for information publication, no rubbish information, convenient management on local contents and so on. It builds a technology platform on which information can be transmitted rapidly, making everyone a potential information provider. After a RSS file is published, the information included in this RSS file can be called by other sites, also could be used in other terminals and servers, for the data are in standard XML format. As more and more sites support RSS, RSS has become the most successful XML application at present. When users want to obtain information in certain networks by RSS, they do not need to obtain information from a website or a webpage one by one, in another word they do not have to login each website providing information; as long as they subscribed to the needed contents in one RSS reader, the contents will automatically appear in the user's RSS reader. Users can subscribe to the channels they need according to their own interests completely, update the contents at anytime, and view the latest messages, making it very convenient in use.

When the user terminal RSS reader updates the contents, the user terminal needs to send a synchronization request to the RSS source server, the RSS source server sends all the information in the channel to the terminal during the next synchronization, even in the situation that only a few items have been updated or no items have been updated, which causes the transmission redundancy of the data information, wherein the transmitting of the redundant information wastes the user's flow; the problem is particularly prominent especially when the above information includes media data (such as pictures, photos). Generally, in the process of the synchronization of the terminal with the server, the transmission time depends on the transmitted data quantity such that the larger the data quantity is, the longer the transmission takes; and the smaller the data quantity is, the shorter it takes. Doubtlessly, the approach of completely sending all the contents consumes a longer transmission time. Therefore, a method is needed to improve the synchronization efficiency, thus reducing the synchronization time, and enhancing the user's experience.

It is noted that publication US20080267221A1 discloses systems and methods for sharing and synchronizing data using the addition of synchronization data to a feed that contains data items. It is further noted that publication US20080155112A1 discloses systems and methods for transmitting and updating information feeds from a server to a client to increase bandwidth efficiency and improve the timeliness of information feed updates. It is also noted that publication US20030101235 D3 discloses a peer-to-peer communication system for use over an underlying computer network system.

### Summary of the Invention

The present invention provides a method, apparatus and system for improving synchronization efficiency of RSS service, to improve synchronization efficiency of RSS service and reduce synchronization time, as defined by the claims 1, 4 and 7.

The present invention provides a method for improving synchronization efficiency of RSS Service, comprising the following steps:
an RSS source server receiving and parsing a synchronization request packet sent from a mobile terminal, wherein the synchronization request packet comprises a last synchronization timestamp, then obtaining a last synchronization time;
the RSS source server determining whether item contents in a channel are updated from the last synchronization time to a current time;
if the item contents in the channel are not updated, the RSS source server sending synchronization data that only comprises a LINK label corresponding to an original item to the mobile terminal; and
if the item contents in the channel are updated, the RSS source server adding the updated contents to the synchronization data and sending the synchronization data to the mobile terminal.

Preferably, the RSS source server adds a current synchronization timestamp to the synchronization data when sending the synchronization data.

Preferably, the steps, in which if the item contents in the channel are not updated, the RSS source server sending synchronization data that only comprises a LINK label corresponding to an original item to the mobile terminal; if the item contents in the channel are updated, the RSS source server adding the updated contents to the synchronization data and sending the synchronization data to the mobile terminal, comprising:
according to a determination that certain items are added to the channel, comprising complete contents of the added items into the synchronization data and then sending to the mobile terminal together with the current synchronization timestamp; and/or
according to a determination that contents of the original items are updated, comprising complete contents of the updated items into the synchronization data and then sending the synchronization data to the mobile terminal together with the current synchronization timestamp.

Preferably, the steps, in which if the item contents in the channel are not updated, the RSS source server sending synchronization data that only comprises a LINK label corresponding to an original item to the mobile terminal; if the item contents in the channel are updated, the RSS source server adding the updated contents to the synchronization data and sending the synchronization data to the mobile terminal, comprising:
according to a determination that certain items in the channel are deleted, filtering the deleted items' contents from the synchronization data and then sending the synchronization data to the mobile terminal together with the current synchronization timestamp.

A RSS source server, configured to receive a synchronization request packet sent from a mobile terminal, and send synchronization data to the mobile terminal according to the synchronization request packet, comprising:
a parsing unit, configured to parse the received synchronization request packet sent from the mobile terminal that comprises a last synchronization timestamp, and then obtain a last synchronization time;
a determination unit, configured to determine whether item contents in a channel have been updated from the last synchronization time to a current time; and
a synchronization data processing unit, comprising a LINK processing module and an updating processing module, the LINK processing module is configured to send the synchronization data that only comprises a LINK label corresponding to an original item to the mobile terminal according to a determination that the item contents in the channel are not updated; and the updating processing module is configured to add updated contents to the synchronization data and send the synchronization data to the mobile terminal according to a determination that the item contents in the channel are updated.

Preferably, the synchronization data processing unit further comprises:
a timestamp adding module, configured to add a current synchronization timestamp when sending the synchronization data.

Preferably, the updating processing module comprises:
an incremental processing sub-module, configured to, according to a determination that certain items are added to the channel, comprise complete contents of the added items into the synchronization data and then send to the mobile terminal together with the current synchronization timestamp; and/or
an updating processing sub-module, configured to, according to a determination that contents of the original items are updated, comprise complete contents of the updated items into the synchronization data and then send the synchronization data to the mobile terminal together with the current synchronization timestamp.

Preferably, the updating processing module comprises:
a deleting item processing sub-module, configured to, according to a determination that certain items in the channel are deleted, filter the deleted items' contents from the synchronization data and then send the synchronization data to the mobile terminal together with the current synchronization timestamp.

A system for improving synchronization efficiency of RSS Service, comprising a mobile terminal and an RSS source server above, wherein the mobile terminal comprises a time marker unit and a communication unit, the time marker unit is configured to add a last synchronization timestamp to a synchronization request packet that are sent by the communication unit to an RSS source server, the communication unit is configured to receive synchronization data from the RSS source server according to the synchronization request packet.

A mobile terminal, which comprises a time marker unit and a communication unit, the time marker unit is configured to add a last synchronization timestamp to a synchronization request packet that are sent by the communication unit to an RSS source server, and the communication unit is configured to receive synchronization data from the RSS source server according to the synchronization request packet.

Preferably, the mobile terminal can further comprise a timestamp obtaining unit configured to parse and save the synchronization data comprising a current synchronization timestamp sent from the RSS source server.

The method, RSS source sever, mobile terminal and system for improving synchronization efficiency of RSS service provided in the present invention obtains the last synchronization time information and determines whether item contents in a channel are updated from the last synchronization timestamp to the current time before the RSS source server sending the synchronization data; if the item contents in the channel are not updated, the RSS source server sends synchronization data that only comprises a LINK label corresponding to an original item to the mobile terminal; and if the item contents in the channel are updated, the RSS source server adds the updated contents to the synchronization data and sending the synchronization data to the mobile terminal, but not the complete contents. Through this method, the transmitted data quantity can be reduced, thus shortening the synchronization time.

### Brief Description of the Drawings

Fig. 1 is a flow chart of a method for improving synchronization efficiency of RSS service according to an embodiment of the present invention;
Fig. 2 is a flow chart of the method according to the above an embodiment, wherein the synchronization data are sent according to the updated contents;
Fig. 3 is a schematic view of a RSS source server structure according to an embodiment of the present invention;
Fig. 4 is a schematic view of the updating processing module structure in Fig. 3; and
Fig. 5 is a schematic view of a system for improving synchronization efficiency of RSS service according to an embodiment of the present invention;

The implementation, functional characteristics and advantages of the present invention object will be further illustrated hereinafter in conjunction with the embodiments and accompanying drawings.

### Detailed Description of the Embodiments

It should be understood, the specific embodiment described here is just used to explain the present invention, not to limit the present invention.

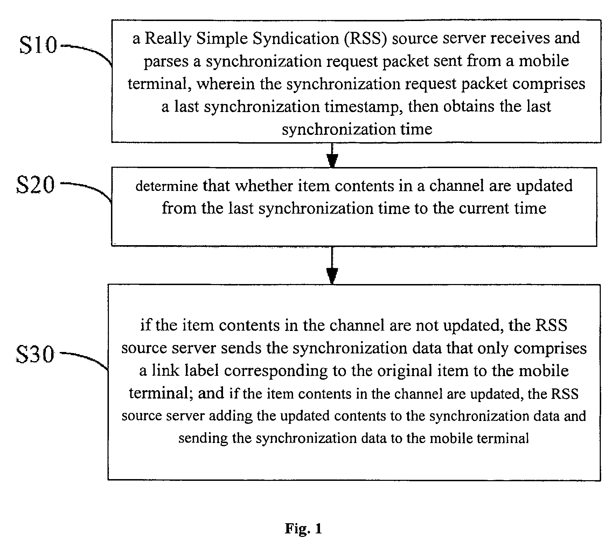

Fig. 1 shows a flow chart of a method for improving synchronization efficiency of RSS service according to an embodiment of the present invention, wherein the flow comprises:
step S10, the RSS source server receiving and parsing a synchronization request packet sent from a mobile terminal, wherein the synchronization request packet comprises a last synchronization timestamp, to obtain the last synchronization time. In the embodiment, the mobile terminal can be mobile phone or PDA etc. The timestamp format can be agreed on with the RSS source server, as long as it can be identified by both sides involved. In the embodiment, the mobile terminal can add a field LastSyncTime (the last synchronization time with the RSS source server, which can be also understood as the latest synchronization time with the RSS source server, that is, latestSyncTime) to the synchronization request packet, and write the timestamp information sent by the server during the last synchronization in the field (such as month:date:hour:minute), then send it to the RSS source server; the RSS source server parses the request packet to obtain the timestamp information in the field LastSyncTime, thus obtaining a last synchronization time.
Step S20, determining whether item contents in the channel are updated from the last synchronization time to the current time; in the embodiment above, the RSS source server can parse the synchronization packet to obtain the last synchronization time of month:date:hour:minute and determine whether item contents in the channel are updated from the last synchronization time to the present time of the current contents. For example, during the time period between January:1st:0:0 to January:2nd:8:0, the RSS source server determines whether the news web pages in a certain news channel are added or deleted, or the contents of the news web pages are updated etc.
Step S30, if the item contents in the channel are not updated, the RSS source server sending the synchronization data that only comprising a link label corresponding to the original item to the mobile terminal; and if the item contents in the channel are updated, the RSS source server adding the updated contents to the synchronization data and sending the synchronization data to the mobile terminal. In the embodiment, if the contents of the original web page are not changed, the RSS source server comprises the Link label of the web page into the synchronization data and sends them to the mobile terminal. The LINK label is a label of HTML language, and it can be used to create inter-linkage with external files. Specifically, the comparison between the data volume in the conventional technology and that in the synchronization data of the embodiment can refer to the following Synchronization data 1 and Synchronization data 2, wherein Synchronization data 1 is the complete contents of an item in the last synchronization data XML file in the conventional technology. In the conventional technology, during the synchronization, even if the last item contents are not changed, the last data are completely sent; in the embodiment, only the LINK label of the original item is comprised, as shown in Synchronization data 2:

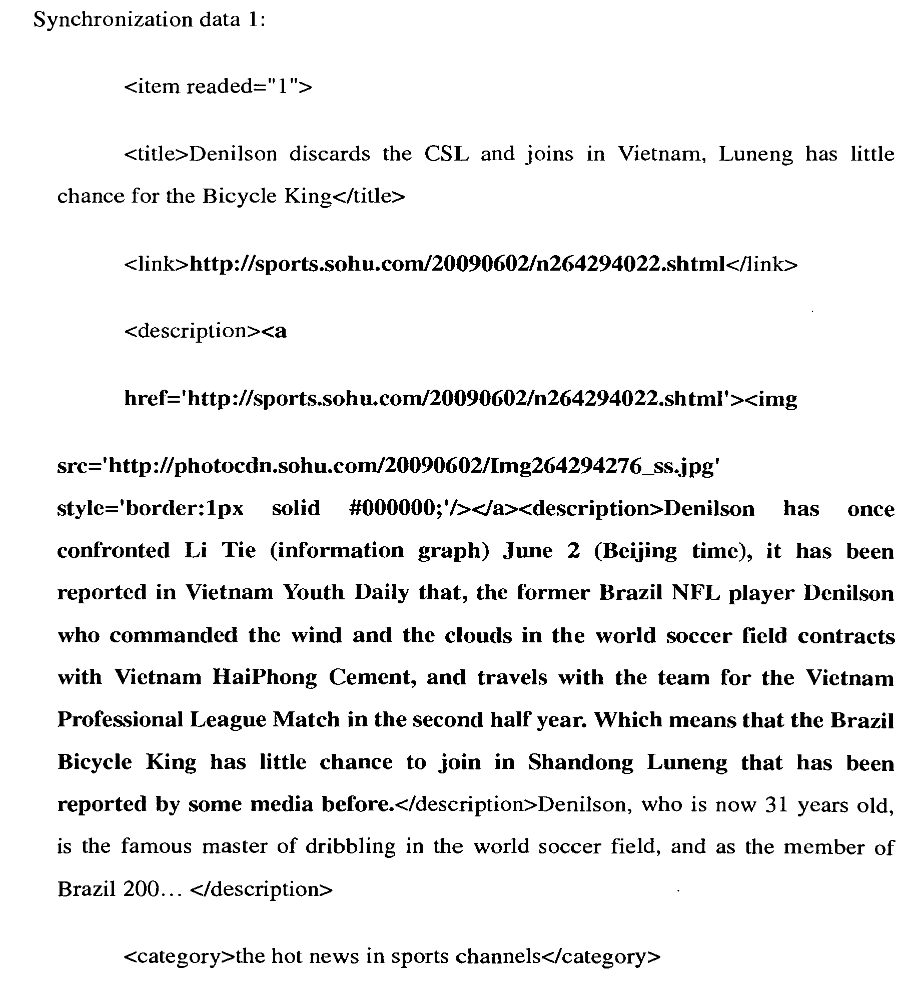

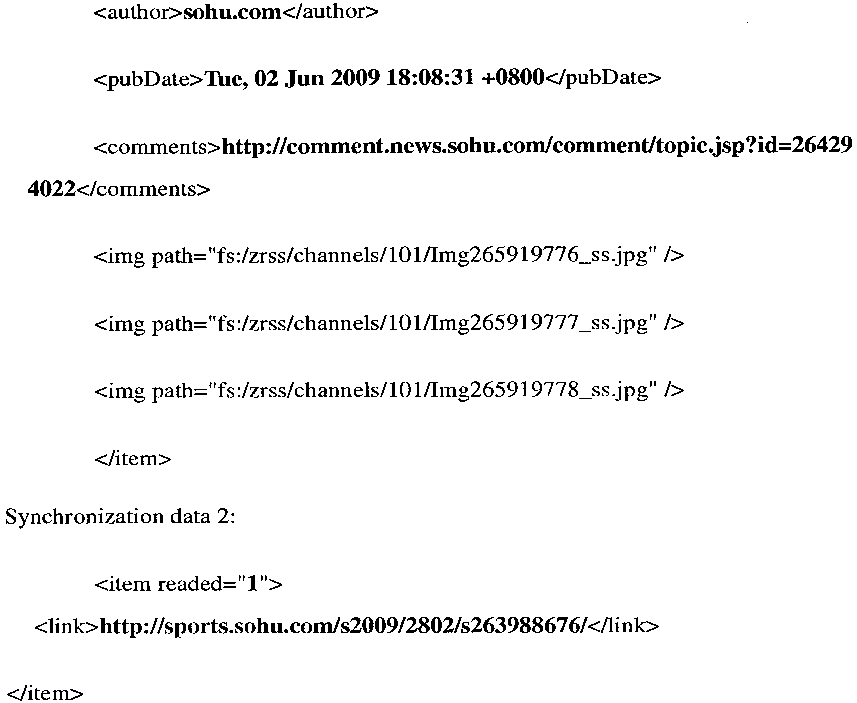

Therefore, the amount of Synchronization data 2 of incremental updating adopted in the embodiment is significantly less than that of Synchronization data 1 of complete updating in the conventional technology, wherein the effect is particularly significant when the items or the contents of the items are quite a lot, thus reducing the time of the data transmission, which can achieve the effect of improving the synchronization efficiency very well. In the communication systems which is charged by data flow, it saves the data flow cost for the users and enhances the user's experience.

In the embodiment, the step S30 can further comprise: adding a current synchronization timestamp to the synchronization data when sending the synchronization data. After the current synchronization timestamp is sent to the mobile terminal, the mobile terminal can comprise the timestamp into the synchronization request packet during the next synchronization and send the synchronization request packet to the RSS source server, which can further save the synchronization time.

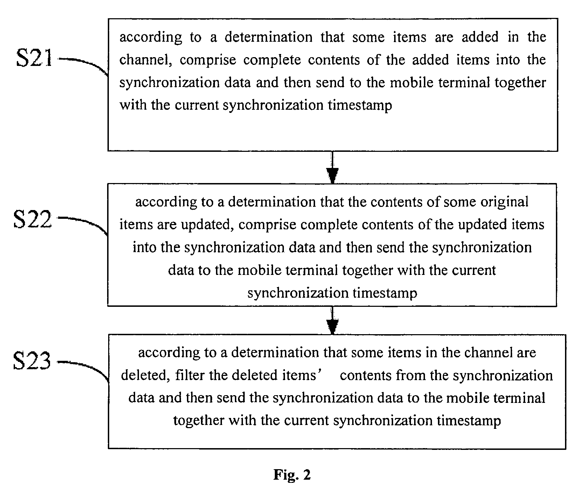

In the step S20, it can be determined that the contents of some items might be updated through the judgment, for example some items are added in the channel, the contents of certain item are updated or certain item is deleted etc. If some contents in the channel are updated, the embodiment can perform corresponding processing, as shown in Fig. 2, in an embodiment, the step S20 above can further comprise:
step S21, according to a determination that certain items are added to the channel, the complete contents of the synchronization data that comprises the added items together with the current synchronization timestamp are sent to the mobile terminal; in the embodiment, if during the last synchronization, the items comprised in the channel are A and B, the contents of the item A and B are not changed, but a new item C is added from the original synchronization time to the current time, then when sending the synchronization data, the RSS source server adds the complete contents of the item C to a XML file, and adds LINK labels to the item A and item B respectively, which are sent to the mobile terminal together with the current synchronization timestamp information.
Step S22, according to the determination that some item contents are updated, the complete contents of the synchronization data that includes the updated items together with the current synchronization timestamp are sent to the mobile terminal. In another embodiment, if the contents of the original item A are updated, for example, the contents of the item A are partly added, partly deleted etc., the complete contents after being updated together with the current synchronization timestamp are sent to the mobile terminal.
Step S23, according to the judgment that some item contents are deleted in the channel, the synchronization data that the item contents have been filtered together with the current synchronization timestamp to the mobile terminal. For example, in the embodiment, if the original item A does not exist anymore, then during this synchronization, the contents of the corresponding items in the synchronization data would be deleted.

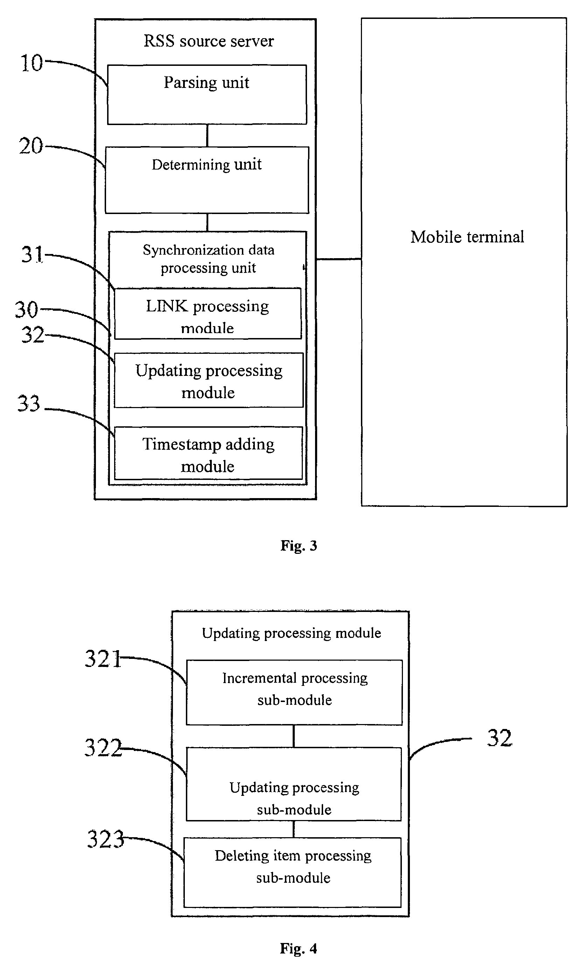

Fig. 3 shows the structure of a RSS source server according to an embodiment of the present invention. The RSS source server is configured to receive a synchronization request packet from a mobile terminal and send synchronization data to the mobile terminal according to the synchronization request packet.

The parsing unit 10 is configured to parse a synchronization request packet sent form a mobile terminal, wherein the synchronization request packet comprises a last synchronization timestamp, then obtain a last synchronization time; for example, in the embodiment above, the mobile terminal can add the field LastSyncTime to the request packet (the last synchronization time with the RSS source server), write the timestamp information in the field sent by the RSS source server during the last synchronization (such as month:date:hour:minute), send to the RSS source server; the source server parses the request packet, obtains the timestamp information in the field LastSyncTime, thus obtaining the last synchronization time.

The judgment unit 20 is configured to determine whether item contents in a channel are updated from the last synchronization time to the current time; in the embodiment, the RSS source server can parse the synchronization packet to obtain the last synchronization time of month:date:hour:minute, and determine whether item contents in the channel are updated from the last synchronization time to the time of the current contents. For example, during the time period between January:1st:0:0 to January:2nd:8:0, the RSS source server determines whether the news web pages in a certain news channel are added or deleted, or the contents of the news web pages are updated etc.

The synchronization data processing unit 30 comprises the LINK processing module 31 and the updating processing module 32, the LINK processing module 31 is configured to send the synchronization data that only comprises a LINK label corresponding to the original item to the mobile terminal according to a determination that the item contents in the channel are not updated; the updating processing module 32 is configured to add updated contents to the synchronization data and send the synchronization data to the mobile terminal according to a determination that the item contents in the channel are updated. Please refer to the embodiment shown in Step S30 in Fig. 1 described above for the process of the synchronization data by LINK processing module 31. There would be no description in details herein.

In the embodiment, the RSS source server can determine whether the item contents in a channel are updated from the last synchronization time to the current time; if the item contents in the channel are not updated, the RSS source server sends the synchronization data that only includes a LINK label corresponding to the item; and if the item contents in the channel are updated, the RSS source server sends the updated contents, thus reducing the synchronization time, which can achieve the effect of improving the synchronization efficiency very well and enhance the user's experience.

In the embodiment, the synchronization data processing unit 30 can also include the timestamp adding module 33used to add the current synchronization timestamp when sending the synchronization data. After the current synchronization timestamp is sent to the mobile terminal, the mobile terminal can include the timestamp in the synchronization request packets during the next synchronization and send the synchronization request packets to the RSS source server, thus saving the synchronization time further.

As shown in Fig. 4, the updating processing module 32 above can comprise:
the incremental processing sub-module 321, configured to comprise complete contents of the added items into the synchronization data and then send to the mobile terminal together with the current synchronization timestamp according to a determination that certain items are added to the channel; and/or
the updating processing sub-module 322, configured to comprise complete contents of the updated items into the synchronization data and then send the synchronization data to the mobile terminal together with the current synchronization timestamp according to a determination that the contents of some original item are updated;
the deleting item processing sub-module 323, configured to comprise filter the deleted items' contents from the synchronization data and then send the synchronization data to the mobile terminal together with the current synchronization timestamp according to a determination that certain items in the channel are deleted.

Please refer to the embodiment shown in Fig. 2 as described above for the process of the synchronization data by the updating processing module 32.

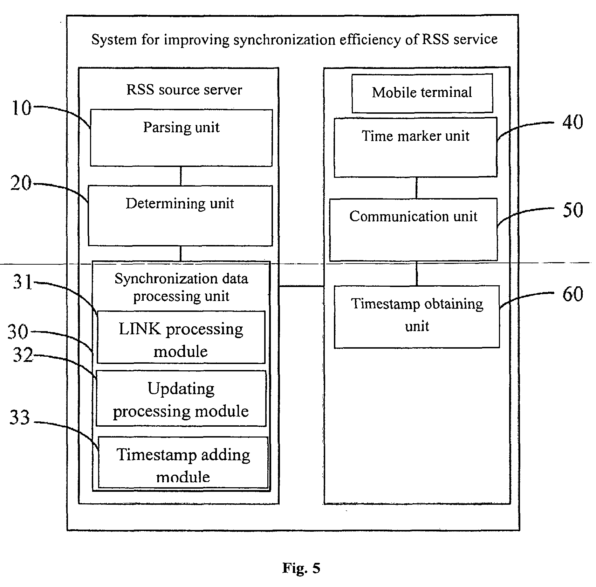

The embodiment further provides a mobile terminal, as shown in Fig. 5, which comprises a time marker unit 40 and a communication unit 50, wherein, the time marker unit 40 is configured to add the last synchronization timestamp to the synchronization request packet that are sent by the communication unit 50 to an RSS source server. The communication unit 50 is configured to receive the synchronization data sent by the RSS source server according to the synchronization request packet. In the embodiment, the time marker unit 40 can add the field LastSyncTime to the synchronization request packet (the last synchronization time with the RSS source server), and write the timestamp information in the field sent by the RSS source server during the last synchronization (such as month:date:hour:minute), so as to send to the RSS source server.

In the embodiment, the mobile terminal can further comprise a timestamp obtaining unit 60, configured to parse and save the synchronization data which comprises the current synchronization timestamp sent from the RSS source server. For example, when the RSS source server above sends the incremental synchronization data processed to the mobile terminal, the synchronization data processing unit can parse and save the incremental synchronization data, to obtain the synchronization data and save the current synchronization timestamp.

In the embodiment, the mobile terminal can be mobile communication terminal products such as mobile phone, PDA.

The embodiment further provides a system for improving synchronization efficiency of RSS service, which comprises the above mobile terminal and the above RSS source server.

The above is just the preferred embodiments of the present invention, not intended to limit the protection scope of the present invention. All the equivalent structure or the equivalent flow transfer which are made using the present invention specification and the accompanying drawings, the direct or the indirect application in other relevant technology fields are similarly all covered in the protection scope of the present invention.

## Claims

1. A method for improving synchronization efficiency of RSS Service, wherein the method comprises:
an RSS source server receiving and parsing a synchronization request packet sent from a mobile terminal, wherein the synchronization request packet comprises a last synchronization timestamp, then obtaining a last synchronization time (S10);
the RSS source server determining whether item contents in a channel are updated from the last synchronization time to a current time (S20);
if the item contents in the channel are not updated, the RSS source server sending synchronization data that only comprises a LINK label corresponding to an original item to the mobile terminal, wherein the LINK label indicates an URL link address corresponding to the original item; and
if the item contents in the channel are updated, the RSS source server adding the updated contents to the synchronization data and sending the synchronization data to the mobile terminal (S30),
wherein the RSS source server adding a current synchronization timestamp to the synchronization data when sending the synchronization data,
after the current synchronization timestamp is sent to the mobile terminal, the mobile terminal comprises the current synchronization timestamp into the synchronization request packet during a next synchronization and send the synchronization request packet to the RSS source server.

2. The method for improving synchronization efficiency of RSS Service as claimed in Claim 1, **characterized in that**,
the steps in which, if the item contents in the channel are not updated, the RSS source server sending synchronization data that only comprises a LINK label corresponding to an original item to the mobile terminal; if the item contents in the channel are updated, the RSS source server adding the updated contents to the synchronization data and sending the synchronization data to the mobile terminal, comprising:
according to a determination that certain items are added to the channel, comprising complete contents of the added items into the synchronization data and then sending to the mobile terminal together with the current synchronization timestamp (S21); and/or
according to a determination that contents of the original items are updated, comprising complete contents of the updated items into the synchronization data and then sending the synchronization data to the mobile terminal together with the current synchronization timestamp (S22).

3. The method for improving synchronization efficiency of RSS Service as claimed in Claim 1, **characterized in that**,
the steps in which, if the item contents in the channel are not updated, the RSS source server sending synchronization data that only comprises a LINK label corresponding to an original item to the mobile terminal; if the item contents in the channel are updated, the RSS source server adding the updated contents to the synchronization data and sending the synchronization data to the mobile terminal, comprising:
according to a determination that certain items in the channel are deleted, filtering the deleted items' contents from the synchronization data and then sending the synchronization data to the mobile terminal together with the current synchronization timestamp (S23).

4. A RSS source server, configured to receive a synchronization request packet sent from a mobile terminal, and send synchronization data to the mobile terminal according to the synchronization request packet, wherein the RSS source server comprises:
a parsing unit (10), configured to parse the received synchronization request packet sent from the mobile terminal that comprises a last synchronization timestamp, and then obtain a last synchronization time;
a determination unit (20), configured to determine whether item contents in a channel have been updated from the last synchronization time to a current time; and
a synchronization data processing unit (30), comprising a LINK processing module and an updating processing module (31), the LINK processing module (32) is configured to send the synchronization data that only comprises a LINK label corresponding to an original item to the mobile terminal according to a determination that the item contents in the channel are not updated, wherein the LINK label indicates an URL link address corresponding to the original item; and the updating processing module is configured to add updated contents to the synchronization data and send the synchronization data to the mobile terminal according to a determination that the item contents in the channel are updated;
wherein the synchronization data processing unit (30) further comprises:
a timestamp adding module (33), configured to add a current synchronization timestamp when sending the synchronization data;
wherein after the current synchronization timestamp is sent to the mobile terminal, the parsing unit (10) configured to parse the received synchronization request packet, that comprises the current synchronization timestamp, sent from the mobile terminal during a next synchronization.

5. The RSS source server as claimed in Claim 4, **characterized in that** the updating processing module (32) comprises:
an incremental processing sub-module (321), configured to, according to a determination that certain items are added to the channel, comprise complete contents of the added items into the synchronization data and then send to the mobile terminal together with the current synchronization timestamp; and/or
an updating processing sub-module (322), configured to, according to a determination that contents of the original items are updated, comprise complete contents of the updated items into the synchronization data and then send the synchronization data to the mobile terminal together with the current synchronization timestamp.

6. The RSS source server as claimed in Claim 4, **characterized in that** the updating processing module (32) comprises:
a deleting item processing sub-module (323), configured to, according to a determination that certain items in the channel are deleted, filter the deleted items' contents from the synchronization data and then send the synchronization data to the mobile terminal together with the current synchronization timestamp.

7. A system for improving synchronization efficiency of RSS Service, **characterized in that**, the system comprises the RSS source server as claimed in anyone of Claims 4-6.

## Patentansprüche

1. Verfahren zur Verbesserung der Synchronisationswirksamkeit eines RSS-Dienstes, wobei das Verfahren umfasst dass:
ein RSS-Quellserver ein Synchronisationsanfragepaket, gesendet von einem mobilen Endgerät, empfängt und analysiert, wobei das Synchronisationsanfragepaket einen letzten Synchronisationszeitstempel umfasst, und dann eine letzte Synchronisationszeit (S10) erhält;
der RSS-Quellserver bestimmt, ob Elementinhalte in einem Kanal von der letzten Synchronisationszeit zu einer aktuellen Zeit aktualisiert sind (S20);
wenn die Elementinhalte in dem Kanal nicht aktualisiert sind, der RSS-Quellserver Synchronisationsdaten sendet, die nur ein LINK-Label entsprechend einem Originalelement an das mobile Endgerät sendet, wobei das LINK-Label eine URL-Linkadresse entsprechend dem Originalelement sendet; und
wenn die Elementinhalte in dem Kanal aktualisiert sind, der RSS-Quellserver die aktualisierten Inhalte zu den Synchronisationsdaten hinzufügt und die Synchronisationsdaten an das mobile Endgerät sendet (S30);
wobei der RSS-Quellserver einen aktuellen Synchronisationszeitstempel zu den Synchronisationsdaten hinzufügt, wenn er die Synchronisationsdaten sendet,
nachdem der aktuelle Synchronisationszeitstempel an das mobile Endgerät gesendet ist, das mobile Endgerät den aktuellen Synchronisationszeitstempel in das Synchronisationsanfragepaket während einer nächsten Synchronisation aufnimmt und das Synchronisationsanfragepaket an den RSS-Quellserver sendet.

2. Verfahren zur Verbesserung der Synchronisationswirksamkeit des RSS-Dienstes nach Anspruch 1, **dadurch gekennzeichnet, dass**
die Schritte, in denen, wenn die Elementinhalte in dem Kanal nicht aktualisiert sind, der RSS-Quellserver Synchronisationsdaten sendet, die nur ein LINK-Label entsprechend einem Originalelement in dem mobilen Endgerät umfassen; wenn die Elementinhalte in dem Kanal aktualisiert sind, der RSS-Quellserver die aktualisierten Inhalte zu den Synchronisationsdaten hinzufügt und die Synchronisationsdaten an das mobile Endgerät sendet, umfassend, dass:
gemäß einer Bestimmung, dass bestimmte Elemente dem Kanal hinzugefügt sind, vollständige Inhalte der hinzugefügten Elemente in die Synchronisationsdaten aufgenommen werden und dann zusammen mit dem aktuellen Synchronisationszeitstempel an das mobile Endgerät gesendet werden (S21); und/oder
gemäß einer Feststellung, dass Inhalte der Originalelemente aktualisiert sind, vollständige Inhalte in die Synchronisationsdaten aufgenommen werden und dann die Synchronisationsdaten zusammen mit dem aktuellen Synchronisationszeitstempel an das mobile Endgerät gesendet werden (S22).

3. Verfahren zur Verbesserung der Synchronisationswirksamkeit des RSS-Dienstes nach Anspruch 1, **dadurch gekennzeichnet, dass**
die Schritte, in denen, wenn die Elementinhalte in dem Kanal nicht aktualisiert sind, der RSS-Quellserver Synchronisationsdaten, die nur ein LINK-Label entsprechend einem Originalelement umfassen, an das mobile Endgerät sendet; wenn die Elementinhalte in dem Kanal aktualisiert sind, der RSS-Quellserver die aktualisierten Inhalte zu den Synchronisationsdaten hinzufügt und die Synchronisationsdaten an das mobile Endgerät sendet, umfassend dass:
gemäß einer Feststellung, dass bestimmte Elemente in dem Kanal gelöscht sind, die Inhalte der gelöschten Elemente aus den Synchronisationsdaten gefiltert werden und die Synchronisationsdaten zusammen mit dem aktuellen Synchronisationszeitstempel an das mobile Endgerät gesendet werden (S23).

4. RSS-Quellserver, konfiguriert zum Empfangen eines Synchronisationsanfragepakets, gesendet von einem mobilen Endgerät, und Senden von Synchronisationsdaten an das mobile Endgerät gemäß dem Synchronisationsanfragepaket, wobei der RSS-Quellserver umfasst:
eine Analyseeinheit (10), konfiguriert zum Analysieren des von dem mobilen Endgerät gesendeten Synchronisationsanfragepakets, das einen letzten Zeitstempel umfasst, und dann Erhalten einer letzten Synchronisationszeit;
eine Bestimmungseinheit (20), konfigurier zum Bestimmen, ob Elementinhalte in einem Kanal von der letzten Synchronisationszeit zu einer aktuellen Zeit aktualisiert sind; und
eine Synchronisationsdatenverarbeitungseinheit (30), umfassend ein LINK-Verarbeitungsmodul und ein aktualisierendes Verarbeitungsmodul (31), wobei das LINK-Verarbeitungsmodul (32) konfiguriert ist um die Synchronisationsdaten, die nur ein LINK-Label entsprechend einem Originalelement umfassen, an das mobile Endgerät zu senden, gemäß einer Bestimmung, dass die Elementinhalte in dem Kanal nicht aktualisiert sind, wobei das LINK-Label eine URL-Linkadresse entsprechend den Originalelementen angibt; und das aktualisierende Verarbeitungsmodul konfiguriert ist, um aktualisierte Inhalte zu den Synchronisationsdaten hinzuzufügen und die Synchronisationsdaten an das mobile Endgerät zu senden, gemäß einer Bestimmung, dass die Elementinhalte in dem Kanal aktualisiert sind;
wobei die Synchronisationsdatenverarbeitungseinheit (30) ferner umfasst:
ein Zeitstempel-Hinzufügungsmodul (33), konfiguriert, um beim Senden der Synchronisationsdaten einen aktuellen Synchronisationszeitstempel hinzuzufügen;
wobei, nachdem der aktuelle Synchronisationszeitstempel an das mobile Endgerät gesendet ist, die Analyseeinheit (10) konfiguriert ist zum Analysieren des empfangenen Synchronisationsanfragepakets, das den von dem mobilen Endgerät gesendeten aktuellen Synchronisationszeitstempel umfasst, während einer nächsten Synchronisation zu analysieren.

5. RSS-Quellserver nach Anspruch 4, **dadurch gekennzeichnet, dass** das aktualisierende Verarbeitungsmodul (32) umfasst:
ein inkrementelles Verarbeitungsuntermodul (321), konfiguriert um, gemäß einer Bestimmung, dass bestimmte Elemente dem Kanal hinzugefügt sind, vollständige Inhalte der hinzugefügten Elemente in die Synchronisationsdaten aufgenommen werden und zusammen mit dem aktuellen Synchronisationszeitstempel an das mobile Endgerät gesendet werden; und/oder
ein aktualisierendes Verarbeitungsuntermodul (322), konfiguriert um, gemäß einer Bestimmung, dass Inhalte der Originalelemente aktualisiert sind, vollständige Inhalte der aktualisierten Elemente in die Synchronisationsdaten aufzunehmen und dann die Synchronisationsdaten zusammen mit dem aktuellen Synchronisationszeitstempel an das mobile Endgerät zu senden.

6. RSS-Quellserver nach Anspruch 4, **dadurch gekennzeichnet, dass** das aktualisierende Verarbeitungsmodul (32) umfasst:
ein löschendes Element-Verarbeitungsuntermodul (323), konfiguriert um, gemäß einer Bestimmung, dass bestimmte Elemente in dem Kanal gelöscht sind, die Inhalte der gelöschten Elemente aus den Synchronisationsdaten zu filtern und dann die Synchronisationsdaten zusammen mit dem aktuellen Synchronisationszeitstempel an das mobile Endgerät zu senden.

7. System zur Verbesserung der Synchronisationswirksamkeit eines RSS-Dienstes, **dadurch gekennzeichnet, dass** das System den RSS-Quellserver nach einem der Ansprüche 4-6 umfasst.

## Revendications

1. Méthode pour améliorer l'efficacité de synchronisation d'un service RSS, la méthode comprenant les étapes suivantes :
un serveur source RSS reçoit et analyse un paquet de demande de synchronisation envoyé par un terminal mobile, le paquet de demande de synchronisation comprenant un dernier horodatage de synchronisation, puis obtient une dernière heure de synchronisation (S10) ;
le serveur source RSS détermine si des contenus d'éléments d'un canal ont été actualisé de la dernière heure de synchronisation à une heure actuelle (S20) ;
si les contenus d'éléments du canal n'ont pas été actualisé, le serveur source RSS envoie des données de synchronisation qui comprennent uniquement une étiquette LINK correspondant à un élément d'origine au terminal mobile, l'étiquette LINK indiquant une adresse de lien URL correspondant à l'élément d'origine ; et
si les contenus d'éléments du canal ont été actualisé, le serveur source RSS ajoute les contenus actualisés aux données de synchronisation et envoie les données de synchronisation au terminal mobile (S30),
dans laquelle le serveur source RSS ajoute un horodatage actuel de synchronisation aux données de synchronisation lorsqu'il envoie les données de synchronisation,
après que l'horodatage actuel de synchronisation a été envoyé au terminal mobile, le terminal mobile inclut l'horodatage actuel de synchronisation dans le paquet de demande de synchronisation lors d'une synchronisation suivante et envoie le paquet de demande de synchronisation au serveur source RSS.

2. Méthode pour améliorer l'efficacité de synchronisation d'un service RSS selon la revendication 1, **caractérisée en ce que**
les étapes lors desquelles, si les contenus d'éléments du canal n'ont pas été actualisés, le serveur source RSS envoie des données de synchronisation qui comprennent uniquement une étiquette LINK correspondant à un élément d'origine au terminal mobile ; si les contenus d'éléments du canal ont été actualisé, le serveur source RSS ajoute les contenus actualisés aux données de synchronisation et envoie les données de synchronisation au terminal mobile, comprennent :
s'il est déterminé que certains éléments ont été ajoutés au canal, l'inclusion des contenus complets des éléments ajoutés dans les données de synchronisation puis l'envoi au terminal mobile conjointement avec l'horodatage actuel de synchronisation (S21) ; et/ou
s'il est déterminé que les contenus d'éléments d'origine ont été actualisés, l'inclusion des contenus complets des éléments actualisés dans les données de synchronisation puis l'envoi des données de synchronisation au terminal mobile conjointement avec l'horodatage actuel de synchronisation (S22).

3. Méthode pour améliorer l'efficacité de synchronisation d'un service RSS selon la revendication 1, **caractérisée en ce que**
les étapes lors desquelles, si les contenus d'éléments du canal n'ont pas été actualisés, le serveur source RSS envoie des données de synchronisation qui comprennent uniquement une étiquette LINK correspondant à un élément d'origine au terminal mobile ; si les contenus d'éléments du canal ont été actualisés, le serveur source RSS ajoute les contenus actualisés aux données de synchronisation et envoie les données de synchronisation au terminal mobile, comprennent :
s'il est déterminé que certains éléments du canal ont été supprimés, le filtrage des contenus des éléments supprimés à partir des données de synchronisation puis l'envoi des données de synchronisation au terminal mobile conjointement avec l'horodatage actuel de synchronisation (S23).

4. Serveur source RSS conçu pour recevoir un paquet de demande de synchronisation envoyé par un terminal mobile et pour envoyer des données de synchronisation au terminal mobile conformément au paquet de demande de synchronisation, le serveur source RSS comprenant :
une unité d'analyse (10) conçue pour analyser le paquet de demande de synchronisation reçu, envoyé par le terminal mobile et comprenant un dernier horodatage de synchronisation, puis pour obtenir une dernière heure de synchronisation ;
une unité de détermination (20) conçue pour déterminer si les contenus d'éléments d'un canal ont été actualisé de la dernière heure de synchronisation à une heure actuelle ; et
une unité de traitement des données de synchronisation (30) comprenant un module de traitement LINK et un module de traitement d'actualisation (31), le module de traitement LINK (32) étant conçu pour envoyer les données de synchronisation qui comprennent uniquement une étiquette LINK correspondant à un élément d'origine au terminal mobile s'il est déterminé que les contenus d'éléments du canal n'ont pas été actualisés, l'étiquette LINK indiquant une adresse de lien URL correspondant à l'élément d'origine ; et le module de traitement d'actualisation étant conçu pour ajouter les contenus actualisés aux données de synchronisation et envoyer les données de synchronisation au terminal mobile s'il est déterminé que les contenus des éléments du canal ont été actualisés ;
dans lequel l'unité de traitement des données de synchronisation (30) comprend en outre :
un module d'ajout d'horodatage (33) conçu pour ajouter un horodatage actuel de synchronisation lors de l'envoi des données de synchronisation ;
dans lequel après que l'horodatage actuel de synchronisation a été envoyé au terminal mobile, l'unité d'analyse (10) est conçue pour analyser le paquet de demande de synchronisation reçu, qui comprend l'horodatage actuel de synchronisation, envoyé par le terminal mobile lors d'une synchronisation suivante.

5. Serveur source RSS selon la revendication 4, **caractérisé en ce que** le module de traitement d'actualisation (32) comprend :
un sous-module de traitement incrémentiel (321) conçu, s'il est déterminé que certains éléments ont été ajoutés au canal, pour inclure les contenus complets des éléments ajoutés dans les données de synchronisation puis pour envoyer celles-ci au terminal mobile conjointement avec l'horodatage actuel de synchronisation ; et/ou
un sous-module de traitement d'actualisation (322) conçu, s'il est déterminé que les contenus des éléments d'origine ont été actualisé, pour inclure les contenus complets des éléments actualisés dans les données de synchronisation puis envoyer les données de synchronisation au terminal mobile conjointement avec l'horodatage actuel de synchronisation.

6. Serveur source RSS selon la revendication 4, **caractérisé en ce que** le module de traitement d'actualisation (32) comprend :
un sous-module de traitement d'élément de suppression (323) conçu, s'il est déterminé que certains éléments du canal ont été supprimés, pour filtrer les contenus des éléments supprimés à partir des données de synchronisation puis envoyer les données de synchronisation au terminal mobile conjointement avec l'horodatage actuel de synchronisation.

7. Système pour améliorer l'efficacité de synchronisation d'un service RSS, **caractérisé en ce que** le système comprend le serveur source RSS selon l'une quelconque des revendications 4 à 6.
